# EUROPEAN PATENT APPLICATION

(11) **EP 2 690 518 A2**
(43) Date of publication of application: **29.01.2014**
(21) Application number: 13169477.0
(22) Date of filing: 28.05.2013
(51) Int. Cl.: G05D 16/06, F16K 47/08, F16L 55/02

(54) **Variable resistance differential pressure regulator**

(30) Priority: 23.07.2012 US 201213507711
(71) Applicant: Baumann, Hans D., W. Palm Beach, FL 33401 (US); Yeary, Arthur Randall, Chicago, IL 60610 (US)
(72) Inventor: Baumann, Hans D., W. Palm Beach, FL 33401 (US); Yeary, Arthur Randall, Chicago, IL 60610 (US)
(74) Representative: Carpmaels & Ransford LLP

(57) **Abstract**

A device capable of dividing the difference between inlet and outlet pressures in a pressure reducing system, in a given proportion, between a conventional control valve and a regulating device, wherein the latter comprises a cylindrical housing being attached to said control valve, having perforations and an interior sliding piston featuring similar perforations, and where the piston is motivated by an inlet pressure pressurized diaphragm, whose force is counteracted by a compression spring.

## Description

### INTRODUCTION AND STATE OF THE ART

The invented device is intended for automatic control applications, and more specifically, for the reduction of high fluid pressures associated with the control of such process variables as volume, temperature, level and pressure of liquid or gaseous fluids.

High pressure reduction in gases can create excessive aerodynamic sound levels when conventional throttling valves are employed. Pressure reduction of liquid media, on the other hand, can produce cavitation, a very noisy and destructive phenomenon.

State of the art devices intended to avoid such annoying or destructive byproducts of pressure reduction, employ special inserts within valve housings, featuring multiport cages, for example. While moderately effective, they are costly and require larger valve sizes due to the restrictive capacity of such cages. Furthermore, such openings have constant size flow openings that are unable to adapt to different flow conditions.

Another attempt to accommodate for larger ratios between inlet and outlet pressures in a given system, is to combine a so-called "low noise valve" with a fixed multi-hole plate in a larger downstream pipe. Such systems work well if the volume controlled does not vary by more than two to one, since, at that point, the pressure drop across the plate is reduced by seventy-five percent, due to the constant flow area of such plates.

### SUMMARY

The present invention overcomes these and other limitations of current devices by providing a two-stage pressure reduction system, where the ratio between the inlet pressure and outlet pressure across each stage remains nearly constant regardless of variations in flow.

In addition, fluid conducting perforations in the invention's secondary device adapt to the typical increase in differential pressure with decreasing flow rate, thereby offering enhanced noise reduction, where it is needed.

Another great advantage of the invented system is, that it can be adapted to any conventional flow control valve, without need to have special low noise inserts, since these devices are used only to regulate the flowing quantity when the assigned pressure drop across such valves is only fifteen to twenty percent of the total differential pressure across the system, as such staying well out of the range where noisy or destructive conditions are encountered.

These and other advantages will be better understood in light of the following detailed description.

### BRIEF DESCRIPTION OF THE DRAWINGS

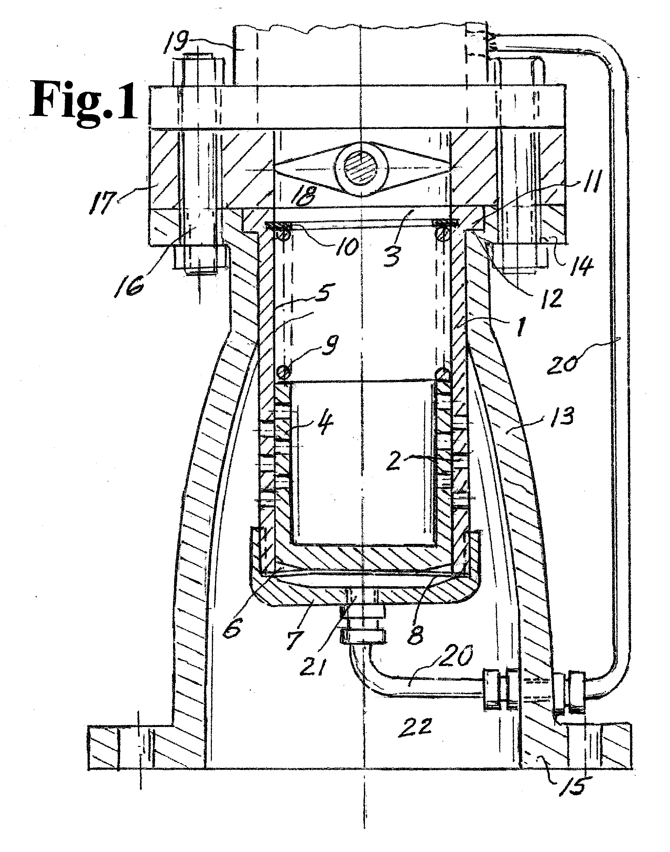

Fig. 1 shows a central, cross-sectional view of the invention in combination with a conventional butterfly valve, where both, the valve and the fluid conducting perforations are in the closed positions.

### DETAILED DESCRIPTION

Referring to Figure 1, the invention comprises a cylindrical housing 1, having a perforated portion 2. Housing 1 has a first opening 3 admitting a perforated piston 4 in the cylindrical bore 5, closed at a second opening 6 by a flange 7. The latter retains a pressurized diaphragm 8, capable of motivating said piston against a compression spring 9, which is shouldered against a retainer 10.

Diaphragm 8 is preferably made from a flexible metal such as stainless steel, otherwise an elastomer can be used.

Housing 1 has an enlarged rim 11 fitting into a complimentary recess 12 which retains the housing within a piping component 13, comprising of a flanged smaller bore 14 and a larger flanged downstream bore 15, whereby the smaller flanged portion is attached by means of fasteners 16, to a conventional control valve 17.

Valve 17 is here featured as a butterfly valve, having an outlet 18. It should be understood that the invention is not limited to the choice of a specific valve type. For example, globe style valves or ball valves may be employed just as well instead of the shown butterfly valve.

Control valve 17 is additionally connected to an inlet pipe 19, capable of admitting high pressure to the inlet of said control valve. A tube 20 is suitably connected to said inlet pipe 19 to conduct high pressure fluid to the interior of the flange 7 by means of port 21.

In the configuration shown, piston 4 is pushed against spring 9 by the up-stream pressure acting on diaphragm 6, causing the piston to slide past the equally spaced perforations in housing 1 and thereby preventing fluid from escaping the housing and into the piping system interior 22.

Conversely, once the valve 17 has opened and admitted fluid to the interior of housing 1, pressure will build up till sufficient pressure plus the load exerted by spring 9 will cause the piston to slide in the direction of flange 7 and thereby cause a portion of the perforations to be overlapping and as a result start discharging fluid. The amount of overlap is self-regulating and the amount of overlap is directly proportional to the amount of fluid discharging from the control valve.

The difference between the reduction of the upstream pressure ahead of the control valve 17 and the pressure motivating the piston to open the perforations is typically chosen to be equivalent to be between ten and thirty percent of the upstream pressure. This ratio is determined by the chosen force and spring rate of the compression spring 9. This means, that between seventy and ninety percent of the upstream pressure energy is converted by the perforations, which are well suited for the task.

The preferred configuration of the perforations are drilled holes, however, a number of equally spaced cylindrical slots would serve just as well. The diameter of the holes is determined by aerodynamic noise consideration. Each hole should produce a peak noise frequency in the downstream pipe that is at least twice that of the ring frequency of the pipe. The result is a better sound attenuation, in this case about 13.5 Decibel sound reduction compared to a conventional valve having a peak frequency of 0.25 of the pipe's ring frequency, see reference 1. Thus, a preferred hole diameter typically is between two and six percent of the downstream pipe diameter.

It should be understood that during reduced flow, when say, the holes are only one half overlapped, an additional 6 Decibel noise reduction is achieved, an important advantage over devices having only fixed openings.

Similar advantages are achieved, when the invented device is used for liquids. For example, from the second reference cited, the allowable pressure drop across a throttling device, using water as fluid, is given as Xfz x (P1 - Pv), where P1 is the absolute inlet pressure and Pv is the vapor pressure. In a given example, a single orifice valve, 100 mm in diameter, has an Xfz factor of 0.07, while a multi-ported device having equal flow capacity but 220 equally sized holes, has an Xfz factor of 0.18. This means, the latter can handle 2.5 times the pressure drop than the single-orifice device without the fluid commencing to cavitate. This advantageous ratio increases even further when the holes partly overlap.

The larger outlet diameter 15 of the piping system 13 is dimensioned to be at least ten percent larger than the flanged inlet opening 14. The purpose is, to prevent high velocity jets exiting from the perforations in the housing 1 to impinge on the interior wall of the piping interior 22 and cause damage.

Additionally, it is advantageous to make the size of the perforations in the piston slightly larger than those it the housing. The purpose is to compensate for possible misalignment between the two sets of openings and to make sure, that the point of maximum velocity of the fluid occurs in the final openings which are located in the housing. A typical choice would be, that the diameter of the perforation in the piston should be eight percent or more larger than those in the housing.

Finally, the geometry of, say, two overlapping holes is such, that the open exposed area decreases exponentially in relation to the distance between the two holes. This yields a relationship between the amount of fluid flow and piston travel, commonly known as an equal percentage flow characteristic, a preferred characteristic used for automatic control purposes.

Having thus shown the functions and features of the invention in a preferred embodiment, it should be understood that numerous changes can be made without departing from the scope of the appended claims. One modification could be to add a travel stop, to limit the excursions of the piston. Another modification would be to space rows of perforations at different intervals, even though the are spaced identical in both housing and piston.

### References cited in the description:

1. "Method for estimating of frequency-dependent sound pressure at pipe exterior of throttling valves". NOISE CONTROL ENGINEERING JOURNAL, Volume 47, Issue 2, March-April 1999, pp. 49-55, Hans D. Baumann

2. A method to estimate hydrodynamic noise produced in valves by submerged turbulent and cavitating water jets." NOISE CONTROL ENGINEERING HOURNAL, Volume 52, Number 2, March-April 2004, pp. 40-53, Hans D. Baumann and Joerg Kiesbauer.

### EMBODIMENTS OF THE INVENTION

Embodiment 1. Variable resistance differential pressure regulator comprising a housing, located inside a piping component, having a cylindrical bore slidingly engaging a perforated piston motivated by one or more compression springs at a first opening and counteracted by a pressurized diaphragm suitably retained at a second opening, and wherein said housing having a perforated portion whereby both sets of perforations are completely overlapping when the piston is in one fixed travel position in order to convey fluid entering from the interior of said piston to the exterior of the housing, said piping component having a smaller bore capable to connect to the outlet of a control valve and having an opposed larger bore capable of connecting to an downstream pipe.

Embodiment 2. Variable resistance differential pressure regulator as in embodiment 1, wherein said diaphragm is fastened and sealed at the other opening of said housing by a flange.

Embodiment 3. Variable resistance differential pressure regulator as in embodiment 2, wherein said flange has a port to convey fluid pressure from the upstream side of a control valve to said diaphragm.

Embodiment 4. Variable resistance differential pressure regulator as in embodiment 1, wherein said piston, when motivated by said diaphragm, is capable of sliding to a position where there is no more overlapping of said perforations and thereby stopping the flow of fluid from the interior of the piston to exterior of said housing.

Embodiment 5. Variable resistance differential pressure regulator as in embodiment 1, wherein said diaphragm is composed of flexible metal.

Embodiment 6. Variable resistance differential pressure regulator as in embodiment 1, wherein said compression springs are suitably retained within the first opening of said housing.

Embodiment 7. Variable resistance differential pressure regulator as in embodiment 6, wherein the compression force of said spring or springs is able to exert a force of between ten to thirty percent of the force produced by fluid pressure imposed on the diaphragm.

Embodiment 8. Variable resistance differential pressure regulator as in embodiment 1, wherein said housing has an enlarged rim near the first opening intersecting with a similar opening at the inlet side of said piping component in order to retain the housing.

Embodiment 9. Variable resistance differential pressure regulator as in embodiment 1, wherein the larger bore of the piping component has a diameter that is at least ten percent larger than the smaller bore.

Embodiment 10. Variable resistance differential pressure regulator as in embodiment 1, wherein the perforations within the housing have a diameter being between two and five percent of the diameter of the larger bore in the piping system.

Embodiment 11. Variable resistance differential pressure regulator as in embodiment 1, wherein the diameter of the perforations in the piston are more than eight percent larger than the diameter of the perforations in the housing.

Embodiment 12. Variable resistance differential pressure regulator as in embodiment 1, wherein the perforations are in form of radial slots.

## Claims

1. Variable resistance differential pressure regulator comprising a housing, located inside a piping component, having a cylindrical bore slidingly engaging a perforated piston motivated by one or more compression springs at a first opening and counteracted by a pressurized diaphragm suitably retained at a second opening, and wherein said housing having a perforated portion whereby both sets of perforations are completely overlapping when the piston is in one fixed travel position in order to convey fluid entering from the interior of said piston to the exterior of the housing, said piping component having a bore capable to connect to the outlet of a control valve and having an opposed bore capable of connecting to an downstream pipe.

2. Variable resistance differential pressure regulator as in claim 1, wherein said diaphragm is fastened and sealed at the other opening of said housing by a flange.

3. Variable resistance differential pressure regulator as in claim 2, wherein said flange has a port to convey fluid pressure from the upstream side of a control valve to said diaphragm.

4. Variable resistance differential pressure regulator as in claim 1, wherein said piston, when motivated by said diaphragm, is capable of sliding to a position where there is no more overlapping of said perforations and thereby stopping the flow of fluid from the interior of the piston to exterior of said housing.

5. Variable resistance differential pressure regulator as in claim 1, wherein said diaphragm is composed of flexible metal.

6. Variable resistance differential pressure regulator as in claim 1, wherein said compression springs are suitably retained within the first opening of said housing.

7. Variable resistance differential pressure regulator as in claim 6, wherein the compression force of said spring or springs is able to exert a force of between ten to thirty percent of the force produced by fluid pressure imposed on the diaphragm.

8. Variable resistance differential pressure regulator as in claim 1, wherein said housing has an enlarged rim near the first opening intersecting with a similar opening at the inlet side of said piping component in order to retain the housing.

9. Variable resistance differential pressure regulator as in claim 1, wherein a portion of the bore of the piping component has a diameter that is at least ten percent larger than the bore diameter of the housing.

10. Variable resistance differential pressure regulator as in claim 1, wherein the perforations within the housing have a diameter being between two and five percent of the diameter of the larger bore in the piping system.

11. Variable resistance differential pressure regulator as in claim 1, wherein the diameter of the perforations in the piston are more than eight percent larger than the diameter of the perforations in the housing.

12. Variable resistance differential pressure regulator as in claim 1, wherein the perforations are in form of radial slots.
